# EUROPÄISCHE PATENTSCHRIFT

(11) **EP 2 934 220 B1**
(45) Veröffentlichungstag und Bekanntmachung des Hinweises auf die Patenterteilung: **06.09.2017**
(21) Anmeldenummer: 13805733.6
(22) Anmeldetag: 02.12.2013
(51) Int. Cl.: A44C 9/00, A44C 27/00

(54) **SCHMUCKRING UND VERFAHREN ZU SEINER HERSTELLUNG**
RING AND PROCESS FOR PRODUCING THE SAME
BAGUE ET SON PROCÉDÉ DE FABRICATION

(30) Priorität: 20.12.2012 CH 29082012; 14.05.2013 DE 102013008188
(43) Veröffentlichungstag der Anmeldung: 28.10.2015
(73) Patentinhaber: Furrer-Jacot AG, 8201 Schaffhausen (CH)
(72) Erfinder: RUPPLI, Lucas, CH-8200 Schaffhausen (CH)
(74) Vertreter: Strässle, Simon
(86) Internationale Anmeldenummer: PCT/CH2013/000206
(87) Internationale Veröffentlichungsnummer: WO 2014/094185

(56) Entgegenhaltungen:
- DE-U1- 29 908 787
- FR-A1- 2 495 509
- FR-A1- 2 866 820
- US-A1- 2008 041 100
- US-A1- 2010 300 149
- US-B1- 6 928 734

## Beschreibung

Die Erfindung bezieht sich auf einen Schmuckring gemäss dem Oberbegriff des Patentanspruchs 1 und ein Verfahren zu dessen Herstellung nach dem Oberbegriff des Patentanspruchs 6.

Schmuckringe werden zum überwiegenden Teil aus den Edelmetallen Gold, Platin, Palladium sowie deren Legierungen gefertigt, welche sich durch ihre hohe Korrosionsfestigkeit auszeichnen, die auch über einen sehr langen Zeitraum eine perfekte Oberfläche des Metalls garantiert. FR2866820 beschreibt ein Schmuckring gemäss dem Oberbegriff des Anspruchs 1. Nachteilig bei diesen Edelmetall-Schmuckringen sind einerseits die hohen Materialkosten und anderseits - bedingt durch die sehr hohe spezifische Dichte der verwendeten Metalle - ihr hohes absolutes Gewicht, insbesondere bei breiten oder massiven Ausführungsformen, welches den Tragkomfort beinträchtigen kann.

Hier will die Erfindung Abhilfe schaffen. Der Erfindung liegt die Aufgabe zugrunde, einen Schmuckring und ein Verfahren zu dessen Herstellung zu schaffen, welche diese Nachteile überwinden, gleichzeitig aber die hohe Korrosionsbeständigkeit, die optimalen Oberflächeneigenschaften und das vorteilhaft optische Gesamterscheinungsbild des Schmuckringes beibehalten oder gar verbessern.

Die Erfindung löst die gestellte Aufgabe mit einem Schmuckring, welcher die Merkmale gemäss dem Anspruch 1 aufweist, sowie einem Verfahren zu dessen Herstellung, welches die Merkmale des Anspruchs 6 aufweist.

Die durch die Erfindung erreichten Vorteile sind im wesentlichen darin zu sehen, dass dank der erfindungsgemässen Vorrichtung:
- eine hohe Korrosionsbeständigkeit beibehalten wird;
- die für Schmuckringe erforderlichen physikalischen und insbesondere optischen Oberflächeneigenschaften beibehalten werden;
- die Oberfläche mindestens teilweise einen seidenähnlichen Glanz erhält;
- die Oberfläche einen dreidimensionalen Tiefeneffekt aufweist; und
- die durchschnittliche spezifische Dichte des Schmuckrings gegenüber reinen

Metallringen deutlich gesenkt wird;
- das Gesamtgewicht des Schmuckrings gegenüber reinen Metallringen deutlich gesenkt wird;
- die Materialkosten für die Herstellung des Schmuckrings erheblich gesenkt werden. Die Dichte ρ₁ des Edelmetall-Substrats entspricht den Dichten für die reinen Edelmetalle Au (19,3 g/cm³), Platin (21,4 g/cm³) oder Palladium (12,0 g/cm³), bzw. der üblichen Legierungen dieser Edelmetalle. Die Dichte ρ₂ des Kunststoff-Klebers liegt typischerweise im Bereich von 1,2 bis 1,6 g/cm³ und die Dichte ρ₃ der Fasern liegt typischerweise im Bereich von 1,3 bis 1,8 g/cm³ also deutlich tiefer als die Dichte ρ₁ des Edelmetall-Substrats.

Weitere vorteilhafte Ausgestaltungen der Erfindung können wie folgt kommentiert werden:
Das Bündel von Fasern ist vorteilhafterweise ein sogenannter Roving dessen Fasern verdrillt worden sind. Das Bündel von Fasern weist bei einer Ausführungsform eine Verdrehung pro 1 - 10 cm, vorzugsweise pro 2 - 4 cm Länge des Bündels auf.

Die Aussenfläche des Schmuckringes kann eine oder mehrere Vertiefungen aufweisen, in welche das Bündel eingelassen ist. Die Tiefe dieser Vertiefungen kann im Bereich von 0,4 bis 1,0 mm liegen.

Das hülsen- oder ringförmige Substrat kann auch mindestens zwei Abschnitte mit verschieden grossen Aussendurchmessern aufweisen, wobei die Abschnitte mit den geringeren Aussendurchmessern mittels des Bündels im Wesentlichen auf den Aussendurchmesser des Abschnittes mit dem grössten Aussendurchmesser gebracht werden können.

Vorteilhafterweise umfasst der transparente Kunststoffkleber ein Epoxidharz und die Fasern bestehen aus Kohlenstoff.

Bei einer besonderen Ausführungsform beträgt die Anzahl der Windungen mehr als 100, vorzugsweise mehr als 150.

Die Kohlenstoffasern haben vorteilhafterweise einen Durchmesser im Bereich von 4,5 - 8 µm, vorzugsweise von 5,5 - 7 µm.

Die Länge des Bündels kann mindestens 3 m, vorzugsweise mindestens 4 m betragen. Die Länge des Bündels kann höchstens 6 m, vorzugsweise höchstens 7 m betragen.

Bei einer besonderen Ausführungsform weist das Bündel von Kohlenstofffasern mindestens 500 Einzelfasern, vorzugsweise mindestens 800 Einzelfasern auf. Das Bündel von Kohlenstofffasern kann höchstens 1200, vorzugsweise höchstens 1500 Einzelfasern aufweisen.

Bei einer anderen Ausführungsform sind die Fasern einzeln oder als Bündel doppelt zusammengelegt.

Die Vertiefungen im Schmuckring können sowohl linear als auch wellenförmig ausgebildet sein.

Bei einer weiteren Ausführungsform können in den Abschnitten mit einem geringeren Aussendurchmesser inselartige Bereiche ausgespart sein, welche den Aussendurchmesser des Abschnittes mit dem grössten Aussendurchmesser aufweisen.

Ein Verfahren zur Herstellung eines erfindungsgemässen Schmuckrings ist durch die folgenden Verfahrensschritte gekennzeichnet:
a) Benetzen des Bündels von Fasern mit dem transparenten Kunststoff-Kleber;
b) Befestigung des Anfangs des mit dem Kunststoff-Kleber behandelten Bündels auf dem hülsen- oder ringförmigen Substrat;
c) Aufwickeln des Bündels auf der Aussenfläche des Schmuckringes;
d) Anpressen des auf den Schmuckring aufgewickelten Bündels;
e) Aushärtung des Kunststoff-Klebers; und
f) Abschleifen der am periphersten gelegenen Fasern.

Der Kunststoffkleber umfasst vorteilhafterweise ein mit Härter vermischtes Epoxidharz, welches insbesondere ein Epoxid auf der Basis von Bisphenol A und oder Bisphenol F enthält. Die Viskosität des Epoxidharzes liegt vorteilhafterweise im Bereich von 350 - 450 mPa·s bei 25°C.

Der Härter für das Epoxidharz ist vorzugsweise ein cycloaliphatisches Amin. Die Viskosität des Härters liegt zweckmässigerweise im Bereich von 180 - 230 mPa·s bei 25°C.

Die Aushärtung des Epoxidharzes kann typischerweise bei einer Temperatur von 55 - 65°C während 2,5 bis 3,5 Stunden erfolgen.

Die Befestigung des Anfangs des Bündels kann zweckmässigerweise durch eine Verknüpfung unter Knotenbildung erfolgen. Das Aufwickeln des Bündels erfolgt vorteilhafterweise in eine in der Aussenfläche eingelassenen Rinne oder Vertiefung des Schmuckrings. Das Bündel wird vorteilhafterweise vor dem Aufwickeln um seine Längsachse verdrillt.

Bei einer besonderen Ausführungsform wird die Rinne vor Befestigung des Bündels aufgeraut, vorzugsweise mittels eines Schleifwerkzeuges, womit eine bessere Verbindung mit dem Epoxidharz erhalten wird.
Das Aufwickeln in Schritt c) des Verfahrens kann mittels Drehung des Schmuckringes erfolgen.
Das Anpressen in Schritt d) des Verfahrens kann vorteilhafterweise mittels eines Schrumpfschlauchs erfolgen der mit Wärme zum Schrumpfen gebracht wird. Nach erfolgtem Anpressen des Schrumpfschlauches kann dieser wieder entfernt werden. Das Abschleifen der am periphersten liegenden Fasern kann zweckmässigerweise auf einer Drehbank erfolgen.
Bei einer besonderen Ausführungsform erfolgt das Aufwickeln derart, dass das Bündel peripher über der Rinne hervorragt. Dadurch wird eine vollständige Füllung der Rinne garantiert.
Vorzugsweise erfolgt das Aufwickeln in Schritt c) des Verfahrens von Hand. Die Karbonfasern können damit gezielt der Ringform angepasst oder um "Inseln" herum gewickelt werden. Das Bündel kann auch unter einem Winkel Alpha > 0° zur Laufrichtung des Ringes auf die Aussenfläche aufgewickelt werden. Auch kann das Bündel slalomförmig zur Laufrichtung des Ringes auf die Aussenfläche aufgewickelt werden.
Bei einer besonderen Ausführungsform kann an eine oder beide der Seitenflächen temporär eine kreisringförmige Scheibe befestigt werden, welche einen grösseren äusseren Durchmesser aufweist als der Schmuckring. Diese Massnahme verhindert dass das Bündel über die Seitenflächen des Ringes hinaus aufgewickelt wird.

Das Gewichtsverhältnis zwischen dem das Substrat bildenden Edelmetall und den Karbonfasern kann sich vorteilhafter weise im Bereich von 13:1 bis 5:1 bewegen.

Die Erfindung und Weiterbildungen der Erfindung werden im Folgenden anhand der teilweise schematischen Darstellungen mehrerer Ausführungsbeispiele noch näher erläutert.

Es zeigen:
Fig. 1 eine perspektivische Ansicht einer Ausführungsform des erfindungsgemässen Schmuckringes;
Fig. 2 einen Querschnitt durch den Schmuckring gemäss Fig. 1;
Fig. 3 einen Querschnitt durch einen Rohling für einen Schmuckring;
Fig. 4 eine perspektivische Ansicht des Rohlings für eine weitere Ausführungsform des erfindungsgemässen Schmuckrings;
Fig. 5 eine perspektivische Ansicht wiederum einer weiteren Ausführungsform des erfindungsgemässen Schmuckrings;
Fig. 6 eine perspektivische Ansicht des Rohlings für die Ausführungsform des erfindungsgemässen Schmuckrings nach Fig. 5; und
Fig. 7 eine perspektivische Schnittdarstellung der Ausführungsform des erfindungsgemässen Schmuckrings nach Fig. 5.

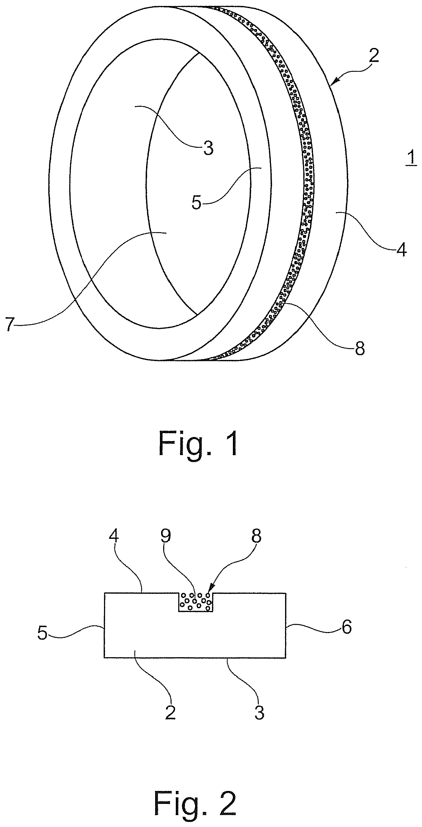

Der in den Figuren 1 und 2 dargestellt Schmuckring 1 besteht aus einem ringförmigen Substrat 2 aus Palladium, welcher eine peripher umlaufende Rinne 10 aufweist, in welcher ein Roving bestehend aus einem Bündel 8 von axial verdrillten Fasern 9 aus Kohlenstoff mit einem spezifischen Gewicht von 1,5 g/cm³ und einem Durchmesser von 6 µm aufgewickelt ist mit etwa 180 - 200 Windungen.
Die Fasern 9 sind mittels eines transparenten Epoxidharz-Klebers untereinander und mit der Rinne 10 verklebt. Die am periphersten liegenden Fasern 9 sind abgeschliffen. Die Oberfläche des Bündels 8 weist einen charakteristischen seidenähnlichen Glanz auf.

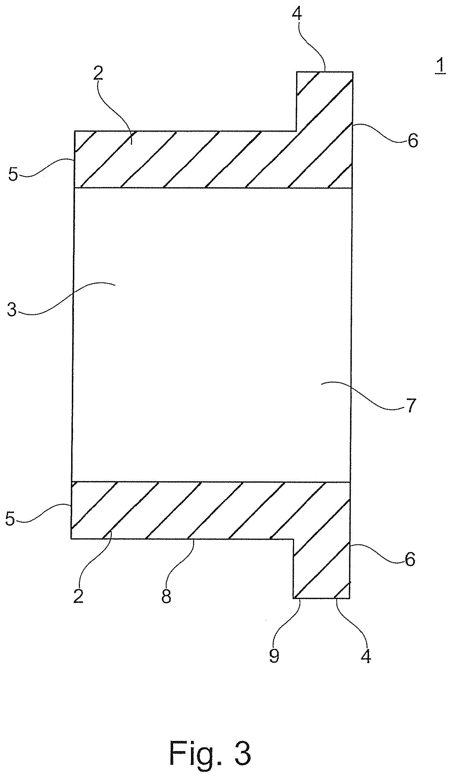

In Fig. 3 ist ein Querschnitt durch einen Rohling für eine andere Ausführungsform des Schmuckrings 1 gezeigt, bei welchem die Rinne 10 auf einer Seite nicht begrenzt ist. Um das Aufwickeln des Rovings zu erleichtern wird während der Herstellung auf der linken (offenen) Seite der Rinne 10 eine Unterlagscheibe mit einem in etwa der rechten Seite des Rohlings entsprechenden Durchmesser befestigt, bzw. angepresst.

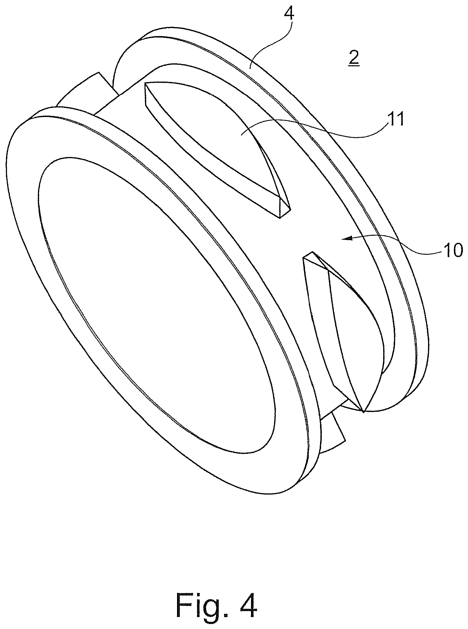

In Fig. 4 ist der Rohling für eine weitere Ausführungsform des Schmuckrings 1 dargestellt. Der Rohling unterscheidet sich von der in den Fig. 1 und 2 dargestellten Ausführungsform nur darin, dass die peripher umlaufende Rinne 10 mit inselartigen Bereichen 11 versehen ist. Diese inselartigen Bereiche 11 können beispielsweise eine linsenförmige Querschnittsfläche senkrecht zu einem Radius des Rohlings aufweisen und sich von der Aussenfläche 4 bis zum Boden der Rinne 10 erstrecken. Die Fasern 9 (nicht gezeichnet) werden um die inselartigen Bereiche 11 herum slalomförmig zur Laufrichtung auf die Aussenfläche 4 mit geringerem Aussendurchmesser gewickelt.

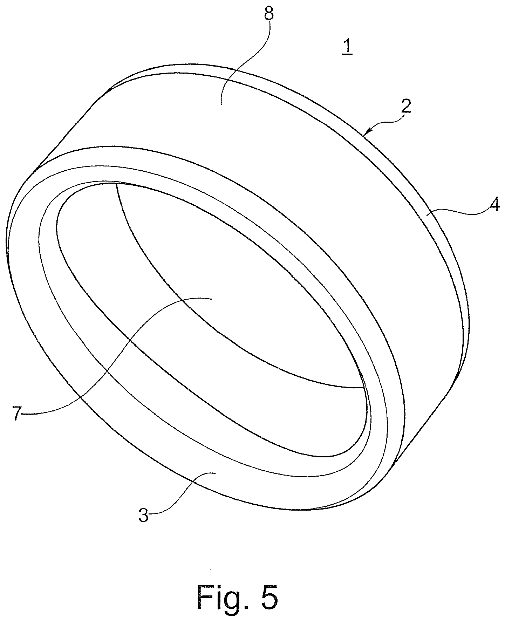

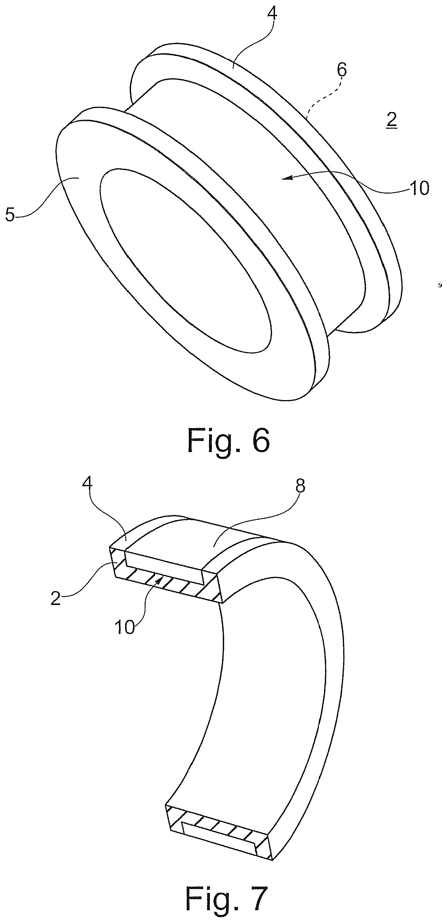

Die Fig. 5 bis 7 stellen wiederum eine weitere Ausführungsform des Schmuckrings 1 dar, welche sich von der in den Fig. 1 und 2 dargestellten Ausführungsform nur darin unterscheidet, dass die Rinne 10 und damit das Bündel 8 von Fasern 9 eine grössere Breite zwischen den zwei Seitenflächen 5, 6 aufweist.

Obwohl wie oben beschrieben verschiedene Ausführungsformen der vorliegenden Erfindung vorliegen, sind diese so zu verstehen, dass die verschiedenen Merkmale sowohl einzeln als auch in jeder beliebigen Kombination verwendet werden können.

Diese Erfindung ist daher nicht einfach auf die oben erwähnten, besonders bevorzugten Ausführungsformen beschränkt.

## Patentansprüche

1. Schmuckring (1), welcher ein hülsen- oder ringförmiges Substrat (2) aus einem Edelmetall oder einer Edelmetall-Legierungen mit einer spezifischen Dichte ρ₁ umfasst und das hülsen- oder ringförmiges Substrat (2) eine innere für den Kontakt mit dem Finger bestimmte Innenfläche (3), eine Aussenfläche (4), zwei Seitenflächen (5,6) und einen zentralen Hohlraum (7) zur Aufnahme des Fingers aufweist,
**dadurch gekennzeichnet, dass**
mindestens auf einem Teil der Aussenfläche (4) ein Bündel (8) von Fasern (9) in mehreren Windungen aufgewickelt ist, wobei
a) die Fasern (8) mittels eines transparenten Kunststoff-Klebers der spezifischen Dichte ρ₂ < ρ₁ untereinander verbunden sind; und
b) die Fasern (8) eine spezifischen Dichte ρ₃ < ρ₁ aufweisen.

2. Schmuckring (1) nach Anspruch 1, **dadurch gekennzeichnet, dass** das Bündel von Fasern verdrillt ist.

3. Schmuckring (1) nach Anspruch 1 oder 2, **dadurch gekennzeichnet, dass** die Aussenfläche (4) eine oder mehrere Vertiefungen aufweist, in welche das Bündel eingelassen ist.

4. Schmuckring (1) nach einem der Ansprüche 1 bis 3, **dadurch gekennzeichnet, dass** der transparente Kunststoffkleber ein Epoxidharz umfasst.

5. Schmuckring (1) nach einem der Ansprüche 1 bis 4, **dadurch gekennzeichnet, dass** die Fasern Kohlenstofffasern sind.

6. Verfahren zur Herstellung eines Schmuckringes (1) nach einem der Ansprüche 1 bis 5, **gekennzeichnet durch** die folgenden Verfahrensschritte:
a) Benetzen des Bündels (8) von Fasern (9) mit dem transparenten Kunststoff-Kleber;
b) Befestigung des Anfangs des mit dem Kunststoff-Kleber behandelten Bündels (8) auf dem hülsen- oder ringförmigen Substrat (2);
c) Aufwickeln des Bündels (8) auf der Aussenfläche (4) des Schmuckringes (1);
d) Anpressen des auf den Schmuckring (1) aufgewickelten Bündels (8);
e) Aushärtung des Kunststoff-Klebers; und
f) Abschleifen der am periphersten gelegenen Fasern (9).

7. Verfahren nach Anspruch 6, **dadurch gekennzeichnet, dass** der Kunststoffkleber ein mit Härter vermischtes Epoxidharz umfasst.

8. Verfahren nach Anspruch 6 oder 7, **dadurch gekennzeichnet, dass** die Befestigung des Anfangs des Bündels durch eine Verknüpfung unter Knotenbildung erfolgt.

9. Verfahren zur Herstellung eines Schmuckringes (1) nach einem der Ansprüche 6 bis 8, **dadurch gekennzeichnet, dass** das Aufwickeln des Bündels in eine in der Aussenfläche (4) eingelassenen Rinne oder Vertiefung erfolgt.

10. Verfahren nach einem der Ansprüche 6 bis 9, **dadurch gekennzeichnet, dass** das Bündel vor dem Aufwickeln verdrillt wird.

## Claims

1. A jewelry ring (1), which comprises a sleeve-like or annular substrate (2) made of a precious metal or a precious metal alloy having a specific density ρ₁, and the sleeve-like or annular substrate (2) has an interior inner surface (3) intended for contact with the finger, an outer surface (4), two lateral surfaces (5, 6) and a central cavity (7) for accommodating the finger,
**characterized in that**
a bundle (8) of fibers (9) is wound in multiple windings on at least a part of the outer surface (4), wherein
a) the fibers (8) are connected to one another by means of a plastic adhesive of the specific density of ρ₂ < ρ₁; and
b) the fibers (8) have a specific density ρ₃ < ρ₁.

2. The jewelry ring (1) according to Claim 1, **characterized in that** the bundle of fibers is twisted.

3. The jewelry ring (1) according to Claim 1 or 2, **characterized in that** the outer surface (4) has one or multiple indentations, in which the bundle is set.

4. The jewelry ring (1) according to one of Claims 1 through 3, **characterized in that** the transparent plastic adhesive comprises an epoxy resin.

5. The jewelry ring (1) according to one of Claims 1 through 4, **characterized in that** the fibers are carbon fibers.

6. A method for manufacturing a jewelry ring (1) according to one of Claims 1 through 5, **characterized by** the following method steps:
a) Wetting the bundle (8) of fibers (9) with the transparent plastic adhesive;
b) Fastening the start of the bundled (8) treated with the plastic adhesive to the sleeve-like or annular substrate (2);
c) Winding the bundle (8) on the outer surface (4) of the jewelry ring (1);
d) Pressing on the bundle (8) wound on the jewelry ring (1);
e) Curing the plastic adhesive; and
f) Grinding off the peripheral-most fibers (9).

7. The method according to Claim 6, **characterized in that** the plastic adhesive comprises an epoxy resin mixed with a hardener.

8. The method according to Claim 6 or 7, **characterized in that** the start of the bundle is attached by a connection formed as a knot.

9. The method for manufacturing a jewelry ring (1) according to one of Claims 6 through 8, **characterized in that** the bundle is wound in a groove or indention set in the outer surface (4).

10. The method according to one of Claims 6 through 9, **characterized in that** the bundle is twisted before being wound.

## Revendications

1. Bague de bijouterie (1), qui comprend un substrat (2) en en forme de manchon ou d'anneau en métal précieux ou en alliage de métal précieux ayant une densité spécifique ρ₁, le substrat (2) en forme de manchon ou d'anneau possédant une face intérieure (3) destinée à venir en contact avec le doigt, une face extérieure (4), deux faces latérales (5, 6) et une cavité centrale (7) destinée à recevoir le doigt, **caractérisée en ce que** un faisceau (8) de fibres (9) est enroulé selon une pluralité d'enroulements au moins sur une partie de la face extérieure (4),
a) les fibres (8) étant reliées entre elles au moyen d'un adhésif synthétique transparent de densité ρ₂ < ρ₁ ; et
b) les fibres (8) ayant une densité spécifique ρ₃ < ρ₁.

2. Bague de bijouterie (1) selon la revendication 1, **caractérisée en ce que** le faisceau de fibres est torsadé.

3. Bague de bijouterie (1) selon la revendication 1 ou 2, **caractérisée en ce que** la face extérieure (4) comporte un ou plusieurs évidements dans lesquels le faisceau est encastré.

4. Bague de bijouterie (1) selon l'une des revendications 1 à 3, **caractérisée en ce que** la colle synthétique transparente comprend une résine époxy.

5. Bague de bijouterie (1) selon l'une des revendications 1 à 4, **caractérisée en ce que** les fibres sont des fibres de carbone.

6. Procédé pour la fabrication d'une bague de bijouterie (1) selon l'une des revendications 1 à 5, **caractérisé par** les étapes de procédé suivantes consistant à :
a) humidifier le faisceau (8) de fibres (9) avec un adhésif synthétique transparent ;
b) fixer le début du faisceau (8), traité avec l'adhésif synthétique (8), sur le substrat (2) en forme de manchon ou d'anneau ;
c) enrouler le faisceau (8) sur la face extérieure (4) de la bague de bijouterie (1);
d) presser le faisceau (8) enroulé sur la bague de bijouterie (1) ;
e) laisser durcir l'adhésif synthétique ; et
f) meuler les fibres (9) situées en périphérie.

7. Procédé selon la revendication 6, **caractérisé en ce que** l'adhésif synthétique comprend une résine époxy mélangée au durcisseur.

8. Procédé selon la revendication 6 ou 7, **caractérisé en ce que** la fixation du début du faisceau est effectuée par une liaison avec formation de noeuds.

9. Procédé de fabrication d'une bague de bijouterie (1) selon l'une des revendications 6 à 8, **caractérisé en ce que** l'enroulement du faisceau est effectué dans une rainure ou un évidement ménagés dans la face extérieure (4).

10. Procédé selon l'une des revendications 6 à 9, **caractérisé en ce que** le faisceau est torsadé avant de l'enrouler.
